# EUROPEAN PATENT APPLICATION

(11) **EP 2 272 323 A1**
(43) Date of publication of application: **12.01.2011**
(21) Application number: 10168709.3
(22) Date of filing: 07.07.2010
(51) Int. Cl.: A01G 3/00, A01G 5/00

(54) **Tool and method for cutting flower stems**

(30) Priority: 09.07.2009 NL 2003169
(71) Applicant: Nanto, 2225 VG Katwijk (NL); Kralt, Teunis Jan Christiaan, 2225 VG Katwijk (NL)
(72) Inventor: Kralt, Teunis Jan Christiaan, 2225 VG, Katwijk (NL)
(74) Representative: Wijnstra, Reinier

(57) **Abstract**

The invention relates to a hand tool (1) and a method for cutting a flower stem. The hand tool (1) comprises a squeeze control mechanism for translating a movement of the hand into a movement of a cutting knife (9). In addition, the hand tool (1) comprises a straight guide (7) for guiding the cutting knife (9). The hand tool also comprises a stem holder (2a,2b) for holding the flower stem and which can be passed through freely to allow the cutting location of the flower stem to be freely selected. The stem holder (2a,2b) is elongate and is provided with a centre axis (5a,5b) in a longitudinal direction in order to keep the flower stem oriented, and in which the centre axis (5a,5b) makes an acute angle with the straight guide (7). The method comprises the step of introducing a flower stem to be cut into the stem holder (2a,2b) and cutting the flower stem to be cut in an oriented manner at a desired cutting angle at a desired cutting location by means of the manual control.

## Description

The invention relates to a hand tool for cutting flower stems according to the preamble of claim 1. The invention further relates to a method for cutting flower stems using the hand tool according to the preamble of claim 15.

A European patent application EP0998846 discloses a cutting device for cutting cut flowers. This cutting device can be operated by hand by means of a squeezing mechanism. The cutting device is furthermore provided with a tube with a funnel. The tube is closed on the side opposite the funnel by means of a stop, so that one end of a flower to be cut can rest thereon. The stem of the flower to be cut has to be introduced into the tube via the funnel and then rests on the stop. A knife is then displaced by squeezing the squeezing mechanism. The knife moves in such a way that it cuts the stem at a cutting angle with respect to the longitudinal direction of the stem. This cutting device has the drawback that it is not possible to cut accurately at a predetermined desired cutting location.

In addition, a pruner for cutting flower stems is known. This pruner is known from patent application GB2305881 and comprises a tubular shaft in which a knife can be displaced in a rectilinear manner. The knife can be displaced up to one end of the tubular shaft. At this end, a recess is provided in the tubular shaft. The recess extends at right angles to the movement of the knife. As a result of the recess in the tubular shaft, an opening is produced for inserting a flower stem to be cut. In a first position, the knife is not situated in the opening. Subsequently, the knife can be displaced in a rectilinear movement, so that the knife is situated in the opening. During said displacement, a flower stem arranged in the opening is cut. The recess is configured such that cutting can take place at any desired cutting location along the flower stem. This pruner has the drawback that it is not possible to cut accurately at a defined cutting angle.

The drawback of the known pruner and cutting device is the fact that it is not possible to accurately cut a flower stem both at a predetermined cutting location and at a defined cutting angle.

It is an object of the present invention to provide a hand tool, in which this drawback is at least partially eliminated or at least to provide a usable alternative.

In particular, it is an object of the invention to reduce the inaccuracy during the cutting of flower stems.

This object is achieved, according to the invention, by the hand tool according to claim 1. This hand tool is suitable for cutting a flower stem. In many cases, the flower stem may be elongate. The hand tool comprises a squeeze control mechanism for translating a movement of the hand into a movement of a cutting knife. The movement of the hand comprises a squeezing and/or pulling movement. Furthermore, the hand tool comprises a straight guide for guiding the cutting knife and a stem holder for holding the flower stem. The stem holder can be passed through freely and allows the cutting location of the flower stem to be freely selected. The object of the invention is achieved by the fact that the stem holder is of an elongate design and is provided with a centre axis in a longitudinal direction in order to keep the flower stem oriented, the centre axis making an acute angle with the straight guide. This hand tool has the advantage that it is possible to achieve both a desired cutting angle and a desired cutting location, with it being possible to orient the flower stem during cutting.

As a result of the fact that the stem holder can be used to orient the flower stem, it is possible, in addition to the cutting location, to also accurately determine a cutting angle between the centre axis of the flower stem and a cut surface of the flower stem. The cut surface is a surface which is cut by the cutting knife and is a cross section of the flower stem transversely to the flower stem. When orienting the flower stem, the flower stem can remain fixed in the stem holder, in which case both the cutting location and the cutting angle are fixed. By keeping the flower stem oriented during cutting, it may be easier for a user to cut the flower stem at a predetermined cutting angle. The flower stem can be introduced into the stem holder before being held in an oriented manner by the stem holder. An advantage is the fact that the lifespan of the flower can be increased. The cutting angle and the cut surface determine the uptake of liquid by the flower. By selecting the predetermined cutting angle to be the same as the cutting angle at which the uptake of liquid is at an optimum level, the lifespan of the flower can be increased. A further advantage is the fact that damage to the flower can be reduced, since the flower stem no longer has to be held after it has been placed in the flower holder.

Preferably, the stem holder is elongate and provided with ends which can be passed through freely, for example a tube having a circular or oval cross section.

More preferably, the stem holder is open in the longitudinal direction, so that an elongate space is provided. The stem holder is channel-shaped, for example. The flower stem can be laid into the elongate space. This may either be a tube or channel having a specific shape, for example a U-shaped or a V-shaped channel. This has the advantage that the cutting location along the centre axis of the flower stem can be oriented more accurately and that the flower stem can be cut to size.

The ends of the stem holder are free, as a result of which the flower stem can be passed freely through the stem holder. The stem holder is not provided with a stop at any end. Such a stop can block the ends and make the free passage of the flower stem impossible. This has the advantage that the flower stem can be cut to any desired length. Not only can the flower stem be cut at a desired cutting location, but, according to the invention, the flower stem can also be cut at a desired cutting angle. In both cases, the flower stem can be oriented during cutting, so that the desired cutting angle and the desired cutting location can also be achieved in an accurate manner. A further advantage is the fact that it makes it possible to execute a rectilinear cutting movement. This is in contrast to a rotating or scissorlike movement, in which a flower stem has to be compressed before being cut through, which may damage the latter.

Preferably, the acute angle between the centre axis of the stem holder and the straight guide can be fixed. This has the advantage that successive flower stems can be cut at the same cutting angle. An additional advantage is the fact that the lifespan of the flowers of the successive flower stems can substantially be expected to be identical.

More preferably, both the straight guide and the centre axis of the stem holder are situated in a horizontal plane in use. This may be the same horizontal plane or parallel horizontal planes. This has the advantage that the user has a better view of the flower stem since the latter can be viewed from above. The use comprises at least the cutting of the flower stems. The hand tool can be used both with a horizontally arranged straight guide and a horizontally arranged centre axis of the stem holder.

More preferably, the cutting knife substantially cuts halfway along the centre axis of the stem holder. A distance between the cutting knife and a first end of the stem holder is substantially equal to the distance between the cutting knife and a second end of the stem holder. This has the advantage that the ease of use of the user can be increased, since the user does not have to take the location of a flower head into account, which is situated at one of the ends of the flower stem. If the flower head is placed near the first end, the flower can experience the same degree of support as when the flower head is placed near the second end.

In another preferred embodiment, the distance between the cutting knife and the end of the stem holder which is distal from the user is greater than the distance between the cutting knife and the end of the stem holder which is proximal to the user. In general, the distance between a desired cut surface and an end of the flower stem which is distal from the flower head will be smaller than the distance between a desired cut surface and an end of the flower stem which is proximal to the flower head. The distance between the desired cut surface and the end of the flower stem which is distal from the flower head can be adapted to the distance between the cutting knife and the end of the stem holder which is proximal to the user. The flower head can be arranged in such a manner that it is distal from the user. This has the advantage that when the same fixation is used, a shorter stem holder can be used during orientation as the support offered by the stem holder can be used in an optimum manner. This can increase the convenience of the hand tool and result in reductions in material and production costs.

Further preferred embodiments of the invention are defined in the subclaims.

In one embodiment according to claim 2, the acute angle between the centre axis of the stem holder and the straight guide is adjustable.

The acute angle between the centre axis of the stem holder and the straight guide determines the cutting angle of the flower stem. By adjusting this acute angle, it is also possible to change the cutting angle. By means of an adjustment mechanism, the stem holder can be designed so as to be rotatable with respect to the straight guide. This has the advantage that the lifespan of various types of flowers after cutting can be increased.

Preferably, the stem holder is rotatable with respect to the straight guide. The straight guide may have a fixed orientation relative to the squeeze control mechanism. The stem holder is then rotatable with respect to the straight guide and the squeeze control mechanism. In use, the user grips the hand tool by the squeeze control mechanism. This has the advantage that adjustment of the acute angle may be user-friendly. When the user has gripped the hand tool by holding the manual control in one hand, the user can use the other hand to rotate the stem holder relative to the straight guide.

In an embodiment according to claim 3, the hand tool comprises at least a first and a second stem holder.

In addition to a first stem holder, the hand tool may also comprise several stem holders. This may be the second stem holder, but also a third, fourth, fifth, etc. This has the advantage that the hand tool can be used for different kinds of flower stems. Thus, each stem holder can be set to its own cutting angle and its own cutting location on the flower stem.

Preferably, the hand tool comprises the first and the second stem holder. The second stem holder has a predetermined position and location with respect to the first stem holder. Thus, the centre axes of the stem holders may be situated parallel to one another, but they can also be at an angle to one another. The stem holders can intersect one another, but can also be separate from one another. An advantage is the fact that time can be saved. Since the hand tool comprises two stem holders, two stem holders can be cut simultaneously.

In an embodiment according to claim 4, a centre axis of the first stem holder makes an acute angle with a centre axis of the second stem holder.

Both the centre axis of the first stem holder and the centre axis of the second stem holder make an acute angle with the straight guide. Since the centre axis of the first stem holder makes an angle with the centre axis of the second stem holder, a different cutting angle can be produced, depending on the stem holder into which the flower stem is placed. This has the advantage that the hand tool can be suitable for several types of flowers, each of which can have a different optimum cutting angle. By means of the hand tool, the flower stem can be cut at a different cutting angle depending on the stem holder into which it is placed. A further advantage is that the ease of use can be improved since there are several stem holders, each with a centre axis which makes a different angle with respect to the straight guide. If the hand tool, which may have a fixed orientation with respect to the straight guide, is held by a first hand, then a second hand, which places the flower stem, can choose into which stem holder the latter should be placed. The user can introduce the flower stem into the stem holder into which the flower can be placed most readily by the second hand. This has the further advantage that cutting can be speeded up.

In an embodiment according to claim 5, the centre axis of the first stem holder and the centre axis of the second stem holder are arranged mirror-symmetrically. The stem holders which are arranged thus comprise a line of symmetry in which the straight guide is provided.

Both the first stem holder and the second stem holder are elongate. The respective centre axes of the stem holders can therefore bound a plane. If this plane is viewed at right angles, the stem holders are arranged in a certain way with respect to one another. They are in a certain position relative to one another. This arrangement may, viewed at right angles to the plane, be mirror-symmetrical. Such a mirror-symmetrical arrangement comprises a line of symmetry in which mirroring takes place. In this line of symmetry, the straight guide is provided, as a result of which the movement of the knife takes place along this line of symmetry. This has the advantage that a compact hand tool can be produced, since the straight guide is situated in the centre of the stem holders. Another advantage is the fact that the hand tool is suitable for both right-hand and left-hand use. With a first method of use of the hand tool, the hand tool can be held in the left hand. The right hand can then place the flower stem into the stem holder. The flower stem can then be cut at a specific angle. If the hand tool is held in the right hand, the left hand can be used to place the flower stem in the stem holder. The flower stem can then be cut at the same specific angle as with the first method of use.

Preferably, the arrangement is such that the centre axes of the first stem holder and the second stem holder form an X. The straight guide is provided at the intersection of the X. The intersection is on the line of symmetry. The cutting knife cuts the flower stem near the intersection between the first stem holder and the second stem holder. This has the advantage that a more compact hand tool can be produced which is suitable for both left-hand and right-hand use.

In an embodiment according to claim 6, the first stem holder and the second stem holder can be made in one piece.

The first stem holder and the second stem holder can be made in one piece. In particular, the stem holders can be made from one injection moulding. This has the advantage that the structure of the stem holders is stiffer and stronger. A further advantage is the fact that production can be simplified, thus making it possible to produce the hand tool less expensively.

In one embodiment according to claim 7, the angle between the centre axis of the first stem holder and the centre axis of the second stem holder is adjustable.

By adjusting the angle between the centre lines of the first stem holder and the second stem holder, cutting angles can be set. This has the advantage that a greater choice of cutting angles for flower stems can be offered.

Preferably, the adjustment of the angle between the centre axis of the first stem holder and the centre axis of the second stem holder is carried out by rotating the first stem holder with respect to the second stem holder, the second stem holder remaining fixed with respect to the straight guide.

In another preferred embodiment, the adjustment of the angle between the centre axis of the first stem holder and the centre axis of the second stem holder is carried out by rotating the second stem holder with respect to the first stem holder, the first stem holder remaining fixed with respect to the straight guide.

In another preferred embodiment, the adjustment of the angle between the centre axis of the first stem holder and the centre axis of the second stem holder is carried out by simultaneously rotating the first stem holder and the second stem holder, both the first stem holder and the second stem holder rotating with respect to the straight guide. In a particularly preferred embodiment, the angle between the centre axis of the first stem holder and the straight guide remains identical to the angle between the centre axis of the second stem holder and the straight guide, before, during and after said rotation.

In an embodiment according to claim 8, the angle between the centre axis of the stem holder and the straight guide is substantially 30 degrees.

When the angle between the centre axis of the stem holder and the straight guide is equal to 30 degrees, a flower stem is cut at a cutting angle equal to 30 degrees with respect to the centre axis of the flower stem. This equals a cutting angle of 60 degrees with respect to the centre axis of the flower stem.

This has the advantage that the lifespan of flowers can be extended after cutting. A cutting angle of 30 or 60 degrees is an optimum cutting angle for many kinds of flowers, since this results in an optimum uptake of liquid by the flower.

In one embodiment according to claim 9, the squeeze control mechanism comprises a first handle and a second handle. The second handle is hingedly connected to the first handle. Furthermore, the squeeze control mechanism comprises a transmission for translating a movement of the handle into the movement of the cutting knife.

Preferably, the first handle and the second handle form a pulling mechanism or squeezing mechanism. In this case, the palm of a first hand can rest on the first handle and the second handle forms a trigger which can be pulled by at least one finger of the first hand. By pulling on the second handle, the second handle hinges about a hinge point with the first handle. This hinge point may be situated near the ends of the first and second handles. The transmission translates the movement of the handle into a movement of the cutting knife, for example by means of a linkage system. This has the advantage that the ease of use can be improved. In a particularly preferred embodiment, the second handle is situated parallel to the first handle and the second handle is able to perform a rectilinear movement which is translated into a rectilinear movement of the cutting knife by the transmission.

Preferably, the squeeze control mechanism comprises a spring which is arranged in such a way that it exerts an opposing force when the handle movement is being executed by the user. This has the advantage that the first handle and the second handle can be brought to a neutral position without the user having to exert additional manual force. The neutral position is in particular an open position with a maximum angle between a centre axis in the longitudinal direction of the first handle and a centre axis in the longitudinal direction of the second handle.

In one embodiment according to claim 10, the transmission comprises a draw bar. This draw bar is hingedly connected to a handle by means of a first hinge. The draw bar is furthermore hingedly connected to the cutting knife by means of a second hinge.

The first hinge is connected to a handle which may be the first handle or the second handle. The draw bar bridges a distance and translates the movement of the handle, which is substantially a rotary movement, into a movement of the cutting knife, which is substantially a rectilinear movement. The draw bar can be subjected to tensile load and to compressive load. This has the advantage that the movement of the handle, which is a rotary movement, can result in a rectilinear movement of the cutting knife in both directions of rotation.

In another preferred embodiment, the movement of the handle is a rectilinear movement. This may, for example, be possible by designing the first handle to be parallel to the second handle.

Preferably, the draw bar is arranged in such a manner that a movement of the handle in which the maximum angle is reduced results in a cutting movement of the cutting knife. The cutting movement is the movement of the cutting knife which is accompanied by the cutting of the flower stem. This has the advantage that the flower stem can be cut by means of a squeezing movement.

Preferably, the distance between the hinge point of the first handle and the second handle and the first hinge is substantially constant. This has the advantage that a simple construction can be achieved.

In an embodiment according to claim 11, in use, the centre axis of the stem holder and the straight guide is arranged horizontally. The draw bar can be moved in a vertical plane.

The use comprises the introduction of a flower stem to be cut and/or the cutting of the flower stem to be cut. In order to cut the flower stem to be cut, a user operates the squeeze control mechanism and the centre axis of the stem holder is situated substantially in a horizontal plane. The straight guide is also situated in an substantially horizontal plane. This may be identical horizontal planes, but can also be parallel horizontal planes. The user does not rotate the hand tool during use, but only operates the squeeze control mechanism. The draw bar can then be moved in the vertical plane. By means of the second hinge, the draw bar is rotatably connected to the cutting knife. The cutting knife moves along the straight guide in a rectilinear manner. This has the advantage that a more compact construction can be achieved.

Preferably, the hand tool comprises at least a first and a second stem holder. In this preferred embodiment, a horizontal plane is defined by a centre axis in the longitudinal direction of the first stem holder and a centre axis in the longitudinal direction of the second stem holder.

Preferably, the first handle can be placed substantially perpendicularly on the straight guide. When using the hand tool according to this variant, an operating hand will have a position such that the extended fingers extend horizontally forwards.

In another preferred embodiment, the first handle can be placed substantially parallel to the straight guide. When using the hand tool according to this variant, an operating hand will have a position such that the extended fingers extend vertically downwards.

In an embodiment according to claim 12, the draw bar, in use, is displaceable in a longitudinal direction of the straight guide.

The straight guide is elongate and defines a longitudinal direction. The draw bar is also elongate and also defines a longitudinal direction. When the squeezing device is operated, the draw bar moves and thus its longitudinal direction moves. By operating the squeeze control mechanism, for example by squeezing or pulling the first handle and/or the second handle, the movement of the cutting knife can be started. In use, the draw bar is displaceable in the longitudinal direction of the straight guide. This also comprises a parallel longitudinal direction of the draw bar with respect to the longitudinal direction of the straight guide. This has the advantage that an optimum construction can be achieved in terms of required construction space. The construction can be made compact and can protrude relatively little.

Preferably, in use, these longitudinal directions are substantially horizontal.

In an embodiment according to claim 13, the straight guide extends along a prolongation of the squeeze control mechanism.

The prolongation of the squeeze control mechanism is defined by an arrangement of the first handle and the second handle. The prolongation of the squeeze control mechanism comprises a prolongation of the first handle and the second handle. This prolongation may be situated in a line of symmetry of the arrangement of the first handle and the second handle. The straight guide extends along this prolongation. This may be both in line with or parallel to the prolongation. This has the advantage that a more compact construction can be achieved which does not protrude.

In an embodiment according to claim 14, in use, the first hinge and the second hinge are provided on the same side of the horizontally arranged stem holder.

In use, both the straight guide and the stem holder are arranged substantially horizontally. Both the straight guide and the centre axis of the stem holder are in a horizontal plane. This may be the same horizontal plane or two horizontal planes arranged parallel to one another. The first hinge and the second hinge are on the same side of the horizontal plane in which the centre line of the stem holder is situated. The first hinge connects a handle to the draw bar. The second hinge connects the cutting knife to the draw bar. By placing the first hinge and the second hinge on the same side, a compact construction can be achieved.

Preferably, the first hinge and the second hinge are situated on a different side to the side where the flowers stems are introduced. More preferably, the side on which the first hinge and the second hinge are situated is a lower side and the side on which the flower stems are introduced is an upper side. This has the advantage that when the flower stems are introduced, the draw bar cannot form an obstruction.

The object of the invention is also achieved by the method according to claim 15. Said method for cutting flower stems with the aid of a hand tool comprises the step of introducing a flower stem to be cut into the stem holder. Furthermore, the method comprises the step of cutting the flower stem to be cut in an oriented manner at a desired cutting angle at a desired cutting location by means of the manual control.

When introducing the flower stem to be cut, the flower stem is placed into the stem holder in such a manner that the flower stem can be cut at a desired cutting location and at a desired cutting angle. Once the flower stem has been introduced into the stem holder, the flower stem is oriented with respect to the straight guide. Thus, the desired cutting location and the desired cutting angle have been determined. Then, the squeeze control mechanism is operated by hand in order to cut the flower stem. A hinging movement is translated into a movement of the cutting knife, for example by squeezing using the hand or by moving a trigger. During the cutting operation, it is not necessary to orient the flower stem with the aid of the other hand. Eventually, the cutting knife cuts the flower stem at the desired cutting location and at the desired cutting angle. An advantage of this method is the fact that the cutting of flower stems can be speeded up, since it is not necessary to orient the flower stem with the other hand during cutting.

An embodiment of the invention will be explained in more detail with reference to the attached drawings, in which features shown in particular embodiments can be regarded as being a common feature according to the invention, in which:
Fig. 1 shows a top view of a hand tool for cutting flower stems;
Fig. 2 shows a first side view of the hand tool in a neutral position;
Fig. 3 shows a second side view of the hand tool in a cutting position;
Fig. 4 shows a three-dimensional exploded view of the hand tool.

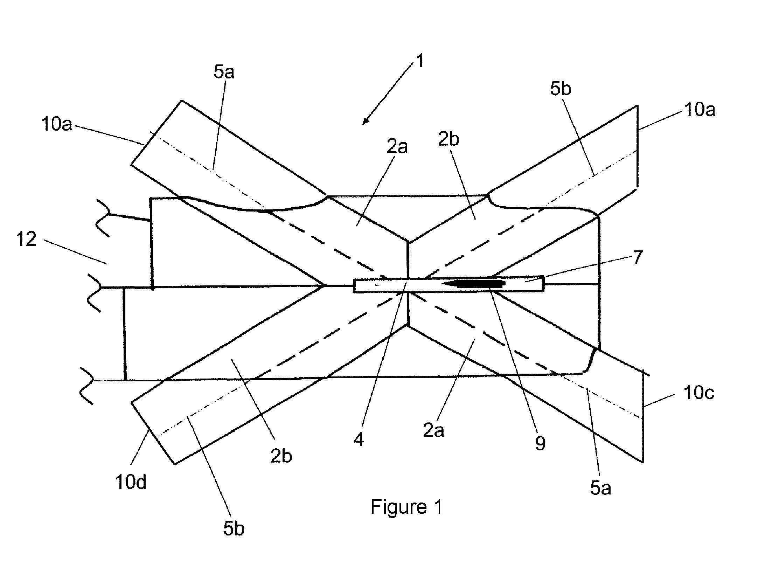

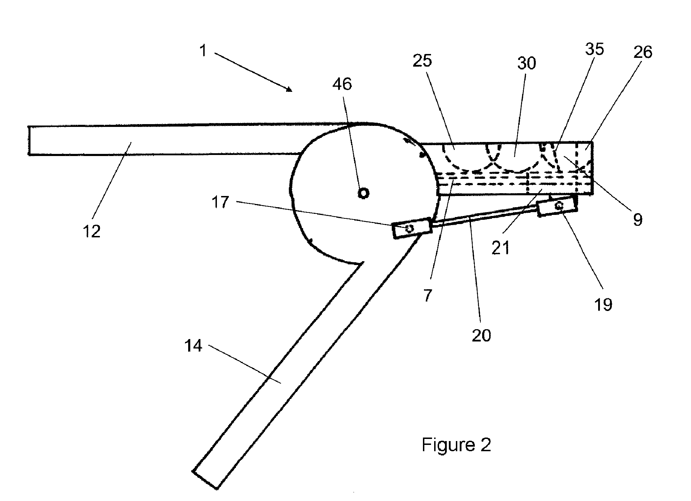

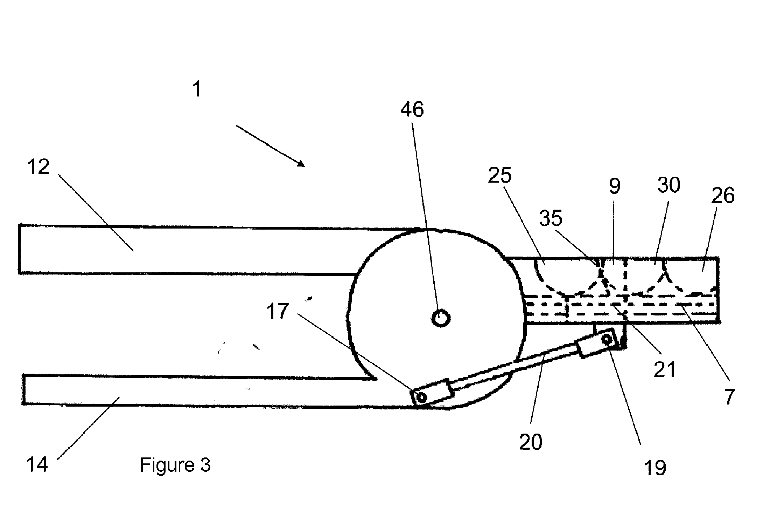

In Fig. 1, the hand tool is denoted overall by reference numeral 1. Furthermore, Fig. 1 shows a first stem holder 2a and a second stem holder 2b which make an acute angle with one another. The first stem holder 2a is arranged in an X shape relative to the second stem holder 2b and together they define an intersection 4. Both the first stem holder 2a and the second stem holder are elongate and define a first centre axis 5a and a second centre axis 5b, respectively. For production purposes, the first stem holder 2a and the second stem holder can be made in one piece. It is also possible for the first stem holder 2a and the second stem holder 2b to be produced in parts, in which a >-shaped part can be coupled to a <-shaped part in such a manner that the X-shaped arrangement can be produced. It is also provided that a V-shaped part can be coupled to a ^-shaped part in such a manner that the X-shaped arranged can be produced. Furthermore, Fig. 1 shows a straight guide 7 which provides a rectilinear movement of a cutting knife 9. The first centre axis 5a and the second centre axis 5b define a first plane. In use, this first plane is preferably a horizontal plane. The use comprises introducing the flower stem into the stem holder 2a, 2b and/or operating the hand tool in such a manner that the flower stem is cut. In Fig. 1, the stem holders are shown in the horizontal plane. The straight guide 7 is situated substantially parallel to or in this first plane. The cutting knife 9 which moves in a rectilinear manner by means of the straight guide 7 cuts a flower stem to be cut at the location of the intersection 4. Since the stem holders 2a, 2b are at an angle to the straight guide 7, the flower stems can be cut at this angle. Fig. 1 furthermore shows a first handle 12. The first handle 12 extends substantially parallel to the straight guide 7 and is fixed with respect to this straight guide 7. A second handle 14 (shown in Figs. 2 and 3) can be hinged with respect to the first handle 12. By means of a transmission, a movement of the handle is translated into the movement of the cutting knife 9. In another embodiment, it is possible to allow the first handle 12 to hinge with respect to the second handle 14, with the second handle 14 being fixed with respect to the straight guide 7. In yet another embodiment, it is provided to design both the first handle 12 and the second handle 14 as well as the straight guide 7 so as to be hingeable with respect to one another. Ends 10a, 10b, 10c, 10d of the stem holders 2a, 2b are designed such that they can be passed through freely. In cross section of the elongate stem holders 2a, 2b, the stem holder 2a, 2b is designed to be open at the ends 10a, 10b, 10c, 10d, which can make the hand tool 1 suitable for readily introducing flower stems. In addition, a cutting location along the longitudinal direction of the flower stem to be cut can be freely determined during the introduction of the latter. In this way, the flower stem can be cut to a specific length. After the flower stem has been introduced, it is oriented in the stem holder 2a, 2b, with the cutting location and the cutting angle having been determined. The cutting angle is defined by the centre axis 5a, 5b of the stem holder 2a, 2b and the straight guide 7 which is of an elongate design.

Fig. 2 shows the hand tool 1 in the neutral position. The neutral position or open position. In the neutral position, the angle between the first handle 12 and the second handle 14 is at its maximum. By bringing the first handle 12 and the second handle 14 together by means of one hand, the cutting knife 9 is displaced along the straight guide 7. The second handle 14 is hingedly connected to a draw bar 20 by means of a first hinge 17. Furthermore, the draw bar is hingedly connected to the cutting knife by means of a second hinge 19. The cutting knife 9 comprises a guide 21 which is displaceable in a rectilinear manner in the straight guide 7. By rotating the second handle 14 towards the first handle 12 by means of the hand, the cutting knife is displaced from an inoperative position in the direction of the handles 12, 14 and in the process cuts the flower stem which is to be cut and which is situated in one of the stem holders 2a, 2b. Fig. 2 shows a cross section of the stem holders 2a, 2b and a first cross section 25, a second cross section 26 and a third cross section 30 of the stem holders 2a, 2b. The flower stem is cut at the location of the third cross section which is situated at the intersection 4 of the stem holders 2a, 2b. The cutting knife comprises a cutting edge 35 for contacting the flower to be cut in a cutting manner. The cutting edge 35 cuts the flower stem to be cut. A second plane is at right angles to the first plane and in the second plane the draw bar 20 and the cutting knife 9 move. Preferably, this second plane is a substantially vertical plane in use. In Figs. 2 and 3, the draw bar 20 and the cutting knife 9 are situated in the vertical plane. The cutting edge 35 makes an angle with a third plane which is at right angles to both the first plane and the second plane.

Fig. 3 shows the hand tool 1 in a cutting position or closed position. The cutting position is produced by bringing the first handle 12 and the second handle 14 together by means of a hand. During this bringing together or squeezing, the cutting knife 9 is displaced along the straight guide 7 in the direction of the handles 12, 14. In the cutting position, a minimum angle is achieved between the first handle 12 and the second handle 14. In this case, the minimum angle is substantially 0 degrees, but in other embodiments it may also include other acute angles, such as at least 3, 4 or 5 degrees. The hand tool furthermore comprises a spring which exerts an opposing force when the first handle 12 and the second handle 14 are brought together. When the hand tool 1 is brought from the neutral position to the cutting position, the cutting knife 9 cuts through the third cross section in its entirety, so that a flower stem which has been introduced therein is cut. The first handle 12, second handle 14, the movement of the draw bar 20 and the movement of the cutting knife 9 are substantially in the same plane, in this case the preferably vertical second plane. The first plane which is bounded by the stem holders 2a, 2b is at right angles to this plane. The stem holders 2a, 2b are channel-shaped and have a semicircular cross section 25, 26, 30. The stem holder 2a, 2b provides an upper opening along the entire longitudinal direction of the stem holder 2a, 2b. It is also possible to design the stem holders 2a, 2b such that they have a different cross section, for example U-shaped, V-shaped or O-shaped. The cross section of the stem holders 2a, 2b may be both open and closed. An open cross section along the longitudinal direction of the stem holder 2a, 2b has the advantage that the flower stem can be introduced into the stem holder 2a, 2b in a simple manner.

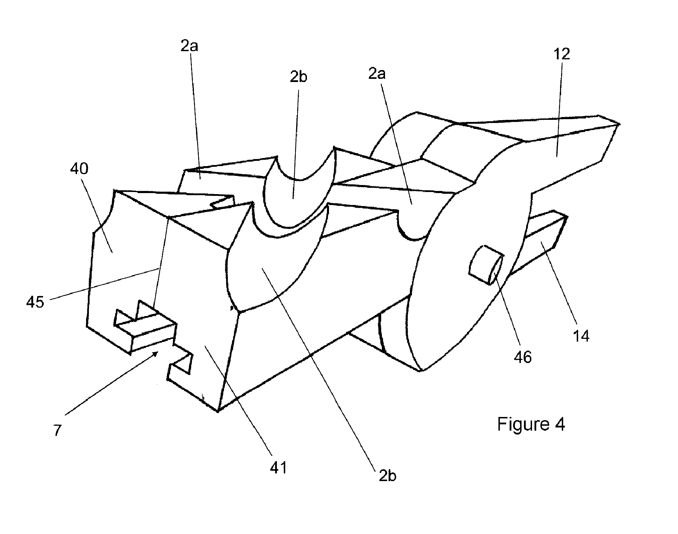

Fig. 4 shows a three-dimensional view of parts of the hand tool. This figure clearly shows that the stem holders 2a, 2b can be made up of several parts. It can be seen that the stem holders are made up of a first part 40 and a second part 41 which define a dividing line 45. The first part 40 and the second part 41 can be coupled together. In addition, Fig. 4 also shows the straight guide 7, which is a recess defined by the first part 40 and the second part. A hinge 46 hingedly connects the first handle 12 to the second handle 14.

Many variants are possible in addition to the illustrated embodiment. Thus, it is for example possible for the hand tool to additionally comprise a third, fourth or several stem holders. These may be arranged at a certain angle with respect to one another. When the cutting knife performs a cutting movement, the cutting knife may move away from the user. Provision is also made that a first stem holder does not intersect with a second stem holder. In this case, they do not define a common intersection where the cutting knife cuts, but each of the stem holders provides a separate cross section in which the flower stem is cut by the movement of the cutting knife. A parallel arrangement of the stem holders is possible, for example. The stem holders may be made from plastic, but may also be made from wood and/or metal or any other suitable material. In addition, a hand tool is provided which, in addition to a stem holder whose centre axis makes an acute angle with the straight guide, comprises a stem holder which makes a right angle with the straight guide.

## Claims

1. Hand tool for cutting a flower stem, comprising:
- a squeeze control mechanism for translating a movement of the hand into a movement of a cutting knife;
- a straight guide for guiding the cutting knife;
- a stem holder for holding the flower stem and which can be passed through freely to allow the cutting location of the flower stem to be freely selected, **characterized in that** the stem holder is elongate and is provided with a centre axis in a longitudinal direction in order to keep the flower stem oriented, and in which the centre axis makes an acute angle with the straight guide.

2. Hand tool according to claim 1, in which the acute angle between the centre axis of the stem holder and the straight guide is adjustable.

3. Hand tool according to at least one of the preceding claims, in which the hand tool comprises at least a first and a second stem holder.

4. Hand tool according to at least one of the preceding claims, in which a centre axis of the first stem holder makes an acute angle with a centre axis of the second stem holder.

5. Hand tool according to at least one of the preceding claims, in which the centre axis of the first stem holder and the centre axis of the second stem holder are arranged mirror-symmetrically, comprising a line of symmetry in which the straight guide is provided.

6. Hand tool according to at least one of the preceding claims, in which the first stem holder and the second stem holder can be made in one piece.

7. Hand tool according to at least one of the preceding claims, in which the angle between the centre axis of the first stem holder and the centre axis of the second stem holder is adjustable.

8. Hand tool according to at least one of the preceding claims, in which the angle between the centre axis of the stem holder and the straight guide is substantially 30 degrees.

9. Hand tool according to at least one of the preceding claims, in which the squeeze control mechanism comprises:
- a first handle;
- a second handle which is hingedly connected to the first handle;
- a transmission for translating a movement of the handle into the movement of the cutting knife.

10. Hand tool according to at least one of the preceding claims, in which the transmission comprises a draw bar which is hingedly connected to a handle by means of a first hinge and is hingedly connected to the cutting knife by means of a second hinge.

11. Hand tool according to at least one of the preceding claims, in which, in use, the centre axis of the stem holder and the straight guide is arranged horizontally and the draw bar can be moved in a vertical plane.

12. Hand tool according to at least one of the preceding claims, in which the draw bar, in use, is displaceable in a longitudinal direction of the straight guide.

13. Hand tool according to at least one of the preceding claims, in which the straight guide extends along a prolongation of the squeeze control mechanism.

14. Hand tool according to at least one of the preceding claims, in which, in use, the first hinge and the second hinge are provided on the same side of the horizontally arranged stem holder.

15. Method for cutting flower stems with the aid of a hand tool according to at least one of the preceding claims, comprising the following steps:
- introducing a flower stem to be cut into the stem holder;
- cutting the flower stem to be cut in an oriented manner at a desired cutting angle at a desired cutting location by means of the manual control.
